# EUROPEAN PATENT SPECIFICATION

(11) **EP 2 527 897 B1**
(45) Date of publication and mention of the grant of the patent: **13.01.2016**
(21) Application number: 12169588.6
(22) Date of filing: 25.05.2012
(51) Int. Cl.: G02B 6/44, H02G 3/14, H02G 3/10

(54) **Termination box for optical fiber network**
Anschlussdose für ein Glasfasernetzwerk
Boîtier de connexion pour un réseau à fibres optiques

(30) Priority: 26.05.2011 IT MI20110958
(43) Date of publication of application: 28.11.2012
(73) Proprietor: Advanced Digital Broadcast S.A., 1292 Geneva (CH)
(72) Inventor: Ronzino, Giancarlo, I-20126 Milan (IT); Castellani, Massimo, I-50041 Calenzano (VI) (IT)
(74) Representative: Di Bernardo, Antonio

(56) References cited:
- EP-A1- 2 045 636
- EP-A1- 2 105 770
- EP-A1- 2 141 528
- DE-A1-102008 025 095
- US-A- 4 874 904
- US-A1- 2002 146 207
- US-A1- 2008 013 893
- US-A1- 2009 074 370

## Description

### TECHNICAL FIELD

The present invention relates to the field of optical fibre telecommunication networks, and particularly to a terminal equipment to be used in an optical fibre network. The equipment according to the invention preferably and advantageously applies to optical fibre networks for SOHO (Small Office, Home Office) environments, as well as to residential environments. Generally, the invention relates to a terminal equipment for optical fibre network according to the preamble of claim 1.

### PRIOR ART

As it is known, optical fibre allows broadband signals to be transmitted over long distances with performances better than those of copper wires, both as regards the available band and as regards immunity to electromagnetic interferences.

In most recent years, a higher proliferation in the use of optical fibres in telecommunication networks has occurred due to the improvement of technology and the reduction of manufacturing costs.

Thus an increasing number of broadband services have been developed (such as IP television and videoconference) that have witnessed the increase of optical fibre connections in homes and offices.

The laying of optical fibre into homes or offices is not always simple and, above all, in the past it required building works to in-wall raceways in order to obtain bending angles consistent with the technology of available fibres.

Recently, fibres with mechanical properties consistent with electrical/telephone raceways potentially available in a residential environment have been developed. Furthermore Duratel SpA has developed and patented a hybrid optical socket that can be housed in standard boxes of electrical or telephone sockets, therefore without the need of arranging ad hoc building works.

Although the socket by Duratel allows some installation drawbacks to be overcome, it has to be connected to an external optical network terminal (ONT) equipped with an electrical terminal and an optical one, that acts to convert the optical signal into an electrical signal and vice versa.

Therefore, the user that desires to have access to broadband services by using the optical fibre has to connect the gateway/router of his/her private network to the electrical connector of the ONT, which interprets the electrical signals of the private network and transmits them over the optical fibre connected to the optical connector. Even if necessary, the use and installation of an external optical terminal has a number of drawbacks and problems.

Firstly, the ONT has to be powered from the supply mains by a suitable power supply, which requires it to be placed near an electrical socket.

Secondly, the fibre or optical fibre patch cable connecting the ONT to the supply mains is exposed to possible damages, for example children that are playing or people stumbling on it can bend it and so damage it or anyway they can affect the transmission properties.

Finally the known ONTs have an optical connector integrated with the body of the ONT, therefore in some cases the ONT has to be mounted in precarious positions in order not to bend the fibre beyond the minimum allowable radius. This makes the installation precarious or difficult anyway.

It is know from the German patent application DE102008025095 a terminal equipment for optical fibre networks comprising an electro-optical converter for converting optical signals transmitted on optical fibre into electrical signals that can be available for a data network by an electrical connector (eg. RJ45 connector). This solution has installation problems related to the fact that the position of the optical fibre and of the electrical connector in the terminal are fixed and this sometimes makes it difficult to install the socket or to connect a computer to the socket without bending too much the network cable or the optical fibre one.

An optical fiber distribution box is also known from EP2141528 and US2009074370. US2009074370, in particular, discloses a fiber optic enclosure assembly which includes a housing having an interior region and a bearing mount disposed in the interior region of the housing. A cable spool is connectedly engaged with the bearing mount such that the cable spool selectively rotates within the housing. A termination module disposed on the cable spool so that the termination module rotates in unison with the cable spool.

### OBJECTS AND SUMMARY OF THE INVENTION

The present invention aims at overcoming some drawbacks of the prior art.

Particularly, the object of the present invention is to simplify the installation of an optical terminal equipment in a residential or office environment.

Then it is an object of the present invention to reduce costs for installing an optical fibre network in a SOHO or residential environment.

According to the invention these and other objects are achieved by a terminal equipment for optical fibre network comprising the characteristics of the annexed claims, which are an integral part of the present description.

The inventors have thought to provide the optical terminal with a fastening system for the optical termination which is the point where the terminal equipment is connected to the external optical fibre; that is to say, the fastening system allows the optical joint that will be made during the installation to be retained. To this end in the present description below when denoting said optical termination reference will be made also to the optical joint term, in order to denote the operating condition of the termination.

This fastening system is firmly engaged with a movable body that can rotate with respect to a plate wherein the electrical connector is fitted upon; this allows said optical termination to be adjusted with respect to the electrical connector. Thus the subsequent joint with the external optical fibre and the electrical connector can be oriented according to different directions facilitating the installation of the optical terminal.

According to a preferred solution, the optical patch cable is housed in a suitable housing, inside the optical terminal, provided with guide means which prevent it from being anomalously bent.

In one embodiment, the fastening system allows the optical joint to take a finite and specific number, particularly higher than one, of relative positions with respect to the electrical connector. This solution allows that, once the optical terminal is installed, there is no more a relative movement between the optical joint and the electrical connector, that is between the point where the optical signal enters into the optical terminal equipment and the point where the electrical signal leaves the optical terminal equipment.

According to one embodiment, the optical terminal equipment comprises a USB port and an electrical interface circuit operatively connected to the USB port and to the electro-optical converter. This electrical interface circuit draws power from the USB port and generates as an output at least a direct electrical voltage for powering the electro-optical converter.

In one embodiment, the optical terminal equipment comprises a box-like body provided with ventilation apertures for cooling the electro-optical converter.

In another embodiment, the optical terminal equipment comprises a forced ventilation system for cooling the electro-optical converter.

In a further embodiment, the optical terminal equipment comprises a second electrical connector for the connection to a telephone pair, said second electrical connector being electrically connected to a third electrical connector, particularly to a terminal or RJ11 connector, for transmitting telephone signals. Thus the optical terminal equipment takes a hybrid function and it can be used for switching analog telephone signals coming from analog telephone network, for example a PSTN network and digital signals (data and voice).

In one embodiment, the optical terminal equipment further comprises means for being secured to a recessed wall-mounted box; thus the equipment can be mounted on a wall as a signal socket or a conventional telephone socket.

The invention further relates to a signal socket for the installation in a wall-mounted or wall-fastened box. Such socket comprises a terminal equipment for optical fibre network having the characteristics mentioned above; in this case orienting of the optical connector is still more important due to the limited spaces where the fibre has to be installed.

### BRIEF DESCRIPTION OF THE DRAWINGS

The invention will be described below with reference to non-limitative examples, given for illustrative and not limitative purposes in the annexed drawings. These drawings show different aspects and embodiments of the present invention and, where considered appropriate, reference numerals illustrating like structures, components, materials and/ or elements in different figures are labeled similarly.
Figure 1 is an optical terminal equipment according to the present invention.
Figures 2a and 2b are two views of a plate of the optical terminal of figure 1.

### DETAILED DESCRIPTION OF THE INVENTION

While the invention is susceptible of various modifications and alternative forms, some preferred embodiments are shown in the drawings and will be described below in detail. It should be understood, however, that there is no intention to limit the invention to the specific embodiment disclosed, but, on the contrary, the intention of the invention is to cover all modifications, alternative forms, and equivalents falling within the scope of the invention as defined in the claims.

In the following description and in the figures, like elements are identified with like reference numerals. The use of "for example", "etc", "or" indicates non-exclusive alternatives without limitation unless otherwise noted. The use of "including" means "including, but not limited to," unless otherwise noted.

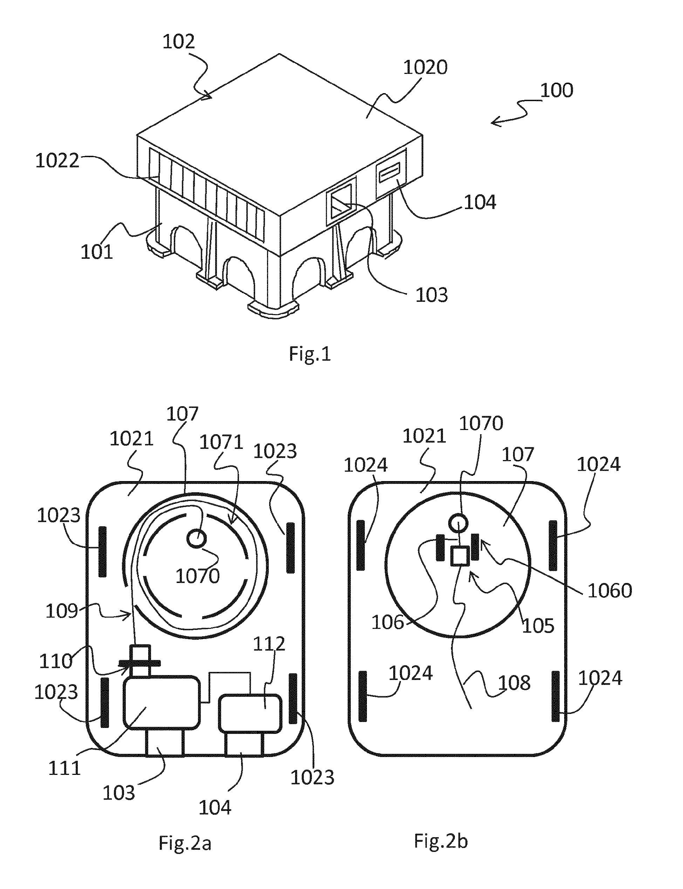

Figure 1 shows an optical terminal equipment 100 according to a preferred embodiment of the present invention.

In this embodiment, the optical terminal equipment 100 is intended to be wall-recessed and, thus, it comprises a box 101 of the type used in the building industry for housing telephone or electrical sockets.

Then on the opposite side of the box 101 there is provided a box-like body 102 composed of a cover 1020 and a plate 1021 (visible in figures 2a and 2b).

The cover 1020 at two sides has ventilation apertures 1022 that allow the electro-optical converter arranged inside the body 102 to be cooled. However the number of the sides where ventilation apertures are provided is not limitative of the present invention and preferably it relates to the amount of heat to be dissipated.

The cover 1020 further has apertures allowing the access from the outside to connectors, particularly a RJ45 connector 103 and a USB port 104.

The plate 1021 at both the sides has tongues 1023 and 1024 allowing it to be snapped with the cover 1020 and the recessed wall-mounted box 101. Thus, the box 101 can be fitted in a wall the installer being free to pull the optical fibre from a network access apparatus to the plate itself. Once this operation is carried out, the fibre arriving from the public network can be joined to a patch cable 109 by a joint 105 connecting the termination 106 of the patch cable 109 to the outer optical fibre 108. In this embodiment therefore no real connector is provided for connecting the fibre and the patch cable, however it should be possible to join the fibre with a connector intended to be secured to another optical connector arranged on the patch cable.

The joint 105 is secured to a movable body 107 by means of a fastening system 1060 allowing the joint 105 to be held or released. Thus the installer can join the termination 106 of the patch cable 109 to the end of the optical fibre 108 arriving from the public network and then fasten the joint made in this manner to the movable body 107 of the plate 1021.

In the example of figure 2a and 2b, the movable body 107 is substantially a perforated disc provided with teeth (not shown in the figure) engaging with corresponding teeth of the plate 1021. Thus by overcoming the frictional force of the teeth it is possible to rotate the movable body 107 and consequently to orient the joint 105 according to a plurality of specific positions. This leads to a greater freedom when installing the optical terminal equipment.

An optical fibre patch cable 109 passes through the movable body 107 passing into a hole 1070 and it connects the joint 105 to the connector 110 of the electro-optical converter 111 arranged on the other side of the plate 1021.

The movable body 107, at the side opposite to the fastening system 1060, has guide members 1071 allowing the patch cable 109 to be housed preventing it from being bent beyond the minimum bending radius beyond which the optical fibre is damaged, namely affecting the transmission properties of the fibre.

The electro-optical converter 111 is connected to the RJ45 connector 103. In this way it is possible to connect an external device, for example a computer or router, to the optical terminal by a patch cable made of copper, for example a 4 pairs cable with a RJ45 connector.

Then the optical terminal 100 comprises an electrical interface circuit 112 operatively connected to the USB port 104. The electrical interface circuit 112 draws power from the USB port 104 and it generates as the output at least a direct electric voltage for powering the electro-optical converter 111.

In operation, the router of the private network is connected to the optical terminal equipment 100 by a USB connection which serves for powering the electro-optical converter 111 and by a data connection to the RJ45 connector 103.

The electro-optical converter 111 converts electrical signals into corresponding optical pulses which are transmitted on the optical fibre patch cable 109 and then to the one 108.

Therefore it is clear that the optical terminal equipment 100 described above reaches the desired objects of improving the facility of installing an optical terminal equipment in a telecommunication network. At the same time, the terminal equipment 100 reaches also the object of completely protecting the optical fibre against possible impacts since it can be completely held into the wall where the terminal equipment is mounted.

Although the invention has been described with reference to a preferred embodiment of an electro-optical terminal equipment integrated into a signal socket for recessed installation, it is clear that many variants are possible for the person skilled in the art without departing from the scope of protection of the patent as it results from the annexed claims.

For instance, in one embodiment the electro-optical converter can be provided with an optical fibre portion integrated thereto (known also as pig-tail) that can be then joined to the patch cable 109. This arrangement allows the use of a connector to be avoided and therefore reduces the dimensions of the equipment.

Again, the optical terminal equipment 100 comprises an electrical connector for the connection to a telephone pair; this electrical connector is electrically connected, as an alternative or in combination:
- to a further electrical connector, for example a terminal connector, for sending the telephone pair towards other points where getting the telephone signal transmitted over the pair,
- to a RJ11 electrical connector for directly getting the telephone signal by telephone, or for example for connecting thereto a FXS port of a residential gateway in order to distribute POTS service in the residential environment.

In addition or as an alternative to the RJ11 connector, the optical terminal equipment 100 can comprise further output electrical connectors.

The USB port 104 then can be used not only for drawing power, but also for communicating data on USB bus. In this case the interface circuit 112 is modified in order to take the data provided on USB bus and to transmit them to the electro-optical converter 111.

The orienting of the joint 105 with respect to the electrical connector 103, can be further obtained by means different than the movable body 107 described above, for example it is possible to provide a movable body rotatably mounted on the plate 1021. In this case the patch cable 109 is passed through a hole outside the movable body and provided on the plate 1021.

Therefore, generally, the fastening system 1060 holding the joint 105 (and consequently the termination 106) can be oriented with respect to the electrical connector 103; this is possible by firmly engaging such fastening system to a movable body 107 of the plate 1021 upon which both the electro-optical converter 111 and the joint 105 and consequently the termination 106 are mounted.

In order to improve the thermal dissipation of the optical terminal equipment, in one embodiment there is provided a forced ventilation system for cooling the electro-optical converter.

In a further variant, the optical terminal equipment can be provided without the box 101 in order to be stand-alone mounted.

In a further variant, the optical terminal can be provided with an optical connector for network testing; such connector can be connected to the optical fibre termination instead of the joint.

## Claims

1. Terminal equipment (100) for an optical fibre network, comprising an optical fibre patch cable (109) with a termination (106) intended to be connected, and particularly joined, to an outer optical fibre,
an electrical connector (103), particularly a RJ45 connector, for the connection to a data network by copper wires,
an electro-optical converter (111) operatively connected to said electrical connector (103) and to said optical fibre patch cable (109) in order to convert electrical signals received from said electrical connector (103) into optical signals to be transmitted to said optical fibre patch cable (109) and vice versa,
a fastening system (1060) for said termination (106),
**characterized in that** said fastening system (1060) can be oriented with respect to said electrical connector (103) and that said fastening system (1060) is firmly engaged with a movable body (107) of a plate (1021), wherein the movable body (107) has the possibility to rotate and wherein said electro-optical converter (111) and said electrical connector (103) are fitted upon said plate (1021).

2. Equipment according to claim 1, wherein said movable body is intended to take a plurality of specific positions.

3. Equipment according to claim 2, wherein the movable body (107) comprises a perforated disc provided with teeth engaging into corresponding teeth of the plate (1021), so as to allow the movable body to rotate overcoming the frictional force of the teeth.

4. Equipment according to any of the claims 1 to 3, further comprising a housing for said optical fibre patch cable, said housing comprising guide means (1071) for positioning said patch cable (109).

5. Equipment according to claim 4 , wherein the fastening system (1060) and the electro-optical converter (111) are placed at the opposite sides of the plate (1021) and wherein said optical fibre patch cable (109) passes through the plate (1021) by passing into a hole (1070) provided in the plate.

6. Equipment according to claim 4, wherein the fastening system (1060) and the electro-optical converter (111) are placed at the opposite sides of the plate (1021) and wherein said optical fibre patch cable (109) passes through the rotating movable body (107) by passing into a hole (1070) provided in the movable body.

7. Equipment according to claim 1 or 2 or 3 or 4 or 5 or 6, wherein said patch cable (109) is joined to a portion of optical fibre coming out from said electro-optical converter.

8. Equipment according to any of the preceding claims, further comprising an USB port (104) and an electrical interface circuit (112) operatively connected to said USB port (104) and to said electro-optical converter (111), said electrical interface circuit (112) being intended to draw power from said USB port (104) and to generate as the output at least a direct electric voltage for powering said electro-optical converter (104).

9. Equipment according to any of the preceding claims, further comprising a second electrical connector for the connection to a telephone pair, said second electrical connector being electrically connected to a third electrical connector, particularly a RJ11 connector or terminal connector, for transmitting telephone signals.

10. Equipment according to any of the preceding claims, further comprising an optical connector joined to said termination (106) for network testing.

11. Equipment according to any of the preceding claims, further comprising a box-like body (102) provided with ventilation apertures (1022) for cooling said electro-optical converter (111).

12. Equipment according to any of the preceding claims, further comprising a forced ventilation system for cooling said electro-optical converter.

13. Equipment according to any of the preceding claims, further comprising means (1023) for being secured to a recessed wall-mounted box (101).

14. Equipment according to claim 13 when depending from claim 10, wherein said plate (1021) on both the sides has tongues for snapping said plate with the box-like body (102) and with the recessed wall-mounted box (101).

15. Signal socket for the installation into a box to be wall-mounted or wall-fastened, **characterized in that** it comprises a terminal equipment for optical fibre network according to any of the preceding claims.

## Patentansprüche

1. Anschlussgerät (100) für ein optisches Fasernetz, welches Folgendes aufweist:
ein optisches Faserpatchkabel (109) mit einem Abschluss (106), der dafür vorgesehen ist, mit einer äußeren optischen Faser verbunden und insbesondere damit zusammengefügt zu werden,
einen optischen Verbinder (103), insbesondere einen RJ45-Verbinder für die Verbindung mit einem Datennetz durch Kupferdrähte,
einen elektrooptischen Wandler (111), der operativ mit dem elektrischen Verbinder (103) und dem optischen Faserpatchkabel (109) verbunden ist, um vom elektrischen Verbinder (103) empfangene elektrische Signale in optische Signale umzuwandeln, die zum optischen Faserpatchkabel (109) zu übertragen sind und umgekehrt,
ein Befestigungssystem (1060) für den Abschluss (106),
**dadurch gekennzeichnet, dass** das Befestigungssystem (1060) in Bezug auf den elektrischen Verbinder (103) orientiert werden kann und das Befestigungssystem (1060) fest in Eingriff mit einem beweglichen Körper (107) einer Platte (1021) steht, wobei der bewegliche Körper (107) die Möglichkeit hat, sich zu drehen, und wobei der elektrooptische Wandler (111) und der elektrische Verbinder (103) auf die Platte (1021) gepasst sind.

2. Gerät nach Anspruch 1, wobei der bewegliche Körper dafür vorgesehen ist, mehrere spezifische Positionen anzunehmen.

3. Gerät nach Anspruch 2, wobei der bewegliche Körper (107) eine perforierte Scheibe aufweist, die mit Zähnen versehen ist, welche in entsprechende Zähne der Platte (1021) eingreifen, um zu ermöglichen, dass sich der bewegliche Körper dreht, wodurch die Reibungskraft der Zähne überwunden wird.

4. Gerät nach einem der Ansprüche 1 bis 3, welches ferner ein Gehäuse für das optische Faserpatchkabel aufweist, wobei das Gehäuse Führungsmittel (1071) für die Positionierung des Patchkabels (109) aufweist.

5. Gerät nach Anspruch 4, wobei das Befestigungssystem (1060) und der elektrooptische Wandler (111) an den entgegengesetzten Seiten der Platte (1021) angeordnet sind und wobei das optische Faserpatchkabel (109) durch die Platte (1021) hindurchtritt, indem es in ein Loch (1070) eintritt, das in der Platte bereitgestellt ist.

6. Gerät nach Anspruch 4, wobei das Befestigungssystem (1060) und der elektrooptische Wandler (111) an den entgegengesetzten Seiten der Platte (1021) angeordnet sind und wobei das optische Faserpatchkabel (109) durch den sich drehenden beweglichen Körper (107) hindurchtritt, indem es in ein Loch (1070) eintritt, das im beweglichen Körper bereitgestellt ist.

7. Gerät nach Anspruch 1, 2, 3, 4, 5 oder 6, wobei das Patchkabel (109) mit einem Abschnitt der optischen Faser zusammengefügt ist, der aus dem elektrooptischen Wandler austritt.

8. Gerät nach einem der vorhergehenden Ansprüche, welches ferner einen USB-Anschluss (104) und eine elektrische Schnittstellenschaltung (112), die operativ mit dem USB-Anschluss (104) und dem elektrooptischen Wandler (111) verbunden ist, aufweist, wobei die elektrische Schnittstellenschaltung (112) dafür vorgesehen ist, Leistung aus dem USB-Anschluss (104) zu ziehen und als Ausgabe wenigstens eine elektrische Gleichspannung für die Energieversorgung des elektrooptischen Wandlers (104) zu erzeugen.

9. Gerät nach einem der vorhergehenden Ansprüche, welches ferner einen zweiten elektrischen Verbinder für die Verbindung mit einem Telefonpaar aufweist, wobei der zweite elektrische Verbinder elektrisch mit einem dritten elektrischen Verbinder, insbesondere einem RJ11-Verbinder oder Anschlussverbinder für das Übertragen von Telefonsignalen, verbunden ist.

10. Gerät nach einem der vorhergehenden Ansprüche, welches ferner einen optischen Verbinder aufweist, der für das Testen des Netzes mit dem Abschluss (106) zusammengefügt ist.

11. Gerät nach einem der vorhergehenden Ansprüche, welches ferner einen kastenartigen Körper (102) aufweist, der mit Lüftungsöffnungen (1022) für das Kühlen des elektrooptischen Wandlers (111) versehen ist.

12. Gerät nach einem der vorhergehenden Ansprüche, welches ferner ein erzwungenes Lüftungssystem für das Kühlen des elektrooptischen Wandlers aufweist.

13. Gerät nach einem der vorhergehenden Ansprüche, welches ferner Mittel (1023) zur Befestigung an einem mit Vertiefungen versehenen an der Wand angebrachten Kasten (101) aufweist.

14. Gerät nach Anspruch 13, sofern abhängig von Anspruch 10, wobei die Platte (1021) auf beiden Seiten Zungen für das Zusammenstecken der Platte mit dem kastenartigen Körper (102) und mit dem mit Vertiefungen versehenen an der Wand angebrachten Kasten (101) aufweist.

15. Signalsteckdose für die Installation in einem an einer Wand anzubringenden oder einer Wand zu befestigenden Kasten, **dadurch gekennzeichnet, dass** sie ein Anschlussgerät für ein optisches Fasernetz gemäß einem der vorhergehenden Ansprüche aufweist.

## Revendications

1. Equipement de terminal (100) pour un réseau à fibres optiques, comprenant :
un câble de raccordement optique (109) avec une terminaison (106) destinée à être connectée, en particulier joint, à une fibre optique externe,
un connecteur électrique (103), en particulier un connecteur RJ45, pour la connexion à un réseau de données par des fils de cuivre,
un convertisseur électro-optique (111) connecté de manière fonctionnelle audit connecteur électrique (103) et audit câble de raccordement optique (109) afin de convertir des signaux électriques reçus en provenance dudit connecteur électrique (103) en signaux optiques devant être transmis audit câble de raccordement optique (109) et vice versa, un système de fixation (1060) pour ladite terminaison (106),
**caractérisé par le fait que** ledit système de fixation (1060) peut être orienté par rapport audit connecteur électrique (103) et **par le fait que** ledit système de fixation (1060) est engagé de manière ferme avec un corps mobile (107) d'une plaque (1021), le corps mobile (107) ayant la possibilité de tourner et ledit convertisseur électro-optique (111) et ledit connecteur électrique (103) étant montés sur ladite plaque (1021).

2. Equipement selon la revendication 1, dans lequel ledit corps mobile est destiné à prendre une pluralité de positions spécifiques.

3. Equipement selon la revendication 2, dans lequel le corps mobile (107) comprend un disque perforé pourvu de dents s'engageant dans des dents correspondantes de la plaque (1021), de façon à permettre au corps mobile de tourner en surmontant la force de frottement des dents.

4. Equipement selon l'une quelconque des revendications 1 à 3, comprenant en outre un boîtier pour ledit câble de raccordement optique, ledit boîtier comprenant des moyens de guidage (1071) pour positionner ledit câble de raccordement (109).

5. Equipement selon la revendication 4, dans lequel le système de fixation (1060) et le convertisseur électro-optique (111) sont placés aux côtés opposés de la plaque (1021) et dans lequel ledit câble de raccordement optique (109) traverse la plaque (1021) en passant dans un trou (1070) ménagé dans la plaque.

6. Equipement selon la revendication 4, dans lequel le système de fixation (1060) et le convertisseur électro-optique (111) sont placés aux côtés opposés de la plaque (1021) et dans lequel ledit câble de raccordement optique (109) traverse le corps mobile en rotation (107) en passant dans un trou (1070) ménagé dans le corps mobile.

7. Equipement selon la revendication 1 ou 2 ou 3 ou 4 ou 5 ou 6, dans lequel ledit câble de raccordement (109) est joint à une partie de fibre optique sortant dudit convertisseur électro-optique.

8. Equipement selon l'une quelconque des revendications précédentes, comprenant en outre un port USB (104) et un circuit d'interface électrique (112) connecté de manière fonctionnelle audit port USB (104) et audit convertisseur électro-optique (111), ledit circuit d'interface électrique (112) étant destiné à tirer de l'électricité dudit port USB (104) et à générer en tant que sortie au moins une tension électrique continue pour alimenter ledit convertisseur électro-optique (104).

9. Equipement selon l'une quelconque des revendications précédentes, comprenant en outre un deuxième connecteur électrique pour la connexion à une paire téléphonique, ledit deuxième connecteur électrique étant connecté électriquement à un troisième connecteur électrique, en particulier un connecteur RJ11 ou un connecteur de terminal, pour transmettre des signaux téléphoniques.

10. Equipement selon l'une quelconque des revendications précédentes, comprenant en outre un connecteur optique joint à ladite terminaison (106) pour un test de réseau.

11. Equipement selon l'une quelconque des revendications précédentes, comprenant en outre un corps en forme de boîtier (102) pourvu d'ouvertures d'aération (1022) pour refroidir ledit convertisseur électro-optique (111).

12. Equipement selon l'une quelconque des revendications précédentes, comprenant en outre un système de ventilation forcée pour refroidir ledit convertisseur électro-optique.

13. Equipement selon l'une quelconque des revendications précédentes, comprenant en outre des moyens (1023) destinés à être fixés à un boîtier à montage mural encastré (101).

14. Equipement selon la revendication 13 lorsque prise en dépendance de la revendication 10, dans lequel ladite plaque (1021) sur les deux côtés a des languettes pour encliqueter ladite plaque avec le corps en forme de boîtier (102) et avec le boîtier à montage mural encastré (101).

15. Prise de signal pour l'installation dans un boîtier devant être monté au mur ou fixé au mur, **caractérisée par le fait qu'**elle comprend un équipement de terminal pour réseau à fibres optiques selon l'une quelconque des revendications précédentes.
